# EUROPÄISCHE PATENTSCHRIFT

(11) **EP 3 415 951 B1**
(45) Veröffentlichungstag und Bekanntmachung des Hinweises auf die Patenterteilung: **07.06.2023**
(21) Anmeldenummer: 17176305.5
(22) Anmeldetag: 16.06.2017
(51) Int. Cl.: G01S 17/42, G01S 7/497

(54) **OPTISCHER SENSOR**
OPTICAL SENSOR
CAPTEUR OPTIQUE

(43) Veröffentlichungstag der Anmeldung: 19.12.2018
(73) Patentinhaber: Leuze electronic GmbH + Co. KG, 73277 Owen/Teck (DE)
(72) Erfinder: Wendel Dr., Simon, 73230 Kirchheim/Teck (DE); Rupp, Jürgen, 73252 Lenningen (DE)
(74) Vertreter: Ruckh, Rainer Gerhard

(56) Entgegenhaltungen:
- EP-A1- 2 237 065
- EP-A1- 2 950 115
- EP-A1- 3 091 369
- EP-A2- 1 939 650
- DE-A1- 10 041 182
- DE-A1-102010 005 012
- DE-B3-102012 102 395
- JP-A- H10 142 335

## Beschreibung

Die Erfindung betrifft einen optischen Sensor gemäß dem Oberbegriff des Anspruchs 1.

Derartige optische Sensoren bilden scannende Sensoren, insbesondere scannende Distanzsensoren, mittels derer ein flächiger Überwachungsbereich hinsichtlich eines Eindringens eines Objekts überwacht werden kann.

Die so ausgebildeten optischen Sensoren werden insbesondere im Bereich der Sicherheitstechnik eingesetzt, um Gefahrenbereiche an stationären Anlagen oder im Vorfeld von Fahrzeugen, insbesondere fahrerlosen Transportfahrzeugen, zu überwachen.

Um die Anforderungen im Bereich der Sicherheitstechnik zu erfüllen, muss der optische Sensor einen entsprechend fehlersicheren Aufbau aufweisen.

Ein generelles Problem bei derartigen optischen Sensoren, nicht nur im Bereich der Sicherheitstechnik, besteht darin, dass dessen Funktionsfähigkeit durch externe Umgebungseinflüsse beeinträchtigt werden kann, so dass keine sichere Objektdetektion mehr möglich ist.

Dies gilt insbesondere für die Scheibe des Gehäuses des optischen Sensors, durch welche die Lichtstrahlen der Sende-/ Empfangseinheit geführt sind, um Objekte im Überwachungsbereich detektieren zu können. Durch Verschmutzungen, Feuchtigkeit oder auch mechanische Beeinträchtigungen wie Risse oder Kratzer in der Scheibe kann die Durchlässigkeit der Scheibe reduziert sein, was zur Folge hat, dass die Lichtstrahlen der Sende-/ Empfangseinheit nicht mehr ungehindert durch die Scheibe geführt werden.

Um derartige Beeinträchtigungen erfassen zu können, ist es bekannt, eine Testeinheit einzusetzen, mittels derer der Zustand der Scheibe erfasst werden kann. Wird dann mit der Testeinheit eine solche Beeinträchtigung registriert, kann eine Warn- oder Störmeldung generiert werden, worauf ein Benutzer entsprechende Wartungsmaßnahmen einleiten kann.

Ein derartiger optischer Sensor ist aus der DE 197 06 612 C2 bekannt.

Der dort beschriebene optische Sensor umfasst ein in einem Gehäuse integriertes, Sendelichtstrahlen emittierendes erstes Sendeelement, wobei die Sendelichtstrahlen über eine Ablenkeinheit innerhalb eines vorgegebenen Winkelbereichs periodisch abgelenkt sind, parallel zu einer Fläche durch ein Austrittsfenster aus dem Gehäuse geführt sind und den Überwachungsbereich überstreichen. Von einem Objekt remittiertes Licht wird über das Austrittsfenster und die Ablenkeinheit zu einem Empfangselement geführt. Zur Kontrolle der Verschmutzung des zu der Fläche schräg verlaufenden Austrittsfensters werden von einem zweiten Sendeelement Testsendelichtstrahlen emittiert, welche über mit der Ablenkeinheit rotierende Umlenkmittel derart abgelenkt werden, dass diese am Strahlausgang der Umlenkmittel an einem in Drehrichtung der Ablenkeinheit verlaufenden Rand des Austrittsfensters austreten und dieses in im wesentlichen senkrechter Richtung zu der Fläche wenigstens einmal durchsetzen. Die am Rand des Austrittsfensters austretenden Testsendelichtstrahlen werden über die mit der Ablenkeinheit mitrotierenden Umlenkmittel einem zweiten Empfangselement zugeführt, so dass die dort auftreffende Lichtmenge als Maß für die Verschmutzung des Austrittsfensters auswertbar ist.

Die JP H10 142 335 A betrifft einen optischen Distanzsensor mit einem Lichtstrahlen emittierenden Sender und einem Lichtstrahlen emittierenden Empfänger, die in einem Gehäuse angeordnet sind. Die Lichtstrahlen werden durch ein Fenster des Gehäuses geführt. Zur Verschmutzungskontrolle des Fensters sind ein außerhalb des Gehäuses angeordneter Testsender und ein innerhalb des Gehäuses angeordneter Testdetektor vorgesehen, wobei Testlichtstrahlen des Testsenders das Gehäuse durchsetzen und dann zum Testdetektor gelangen.

Die DE 10 2010 005 012 A1 betrifft einen optoelektronischen Scanner zur Überwachung wenigstens eines Schutzfeldes. Dieser umfasst einen Lichtsender zur Aussendung von Lichtsignalen, eine Lichtablenkeinheit zur Ablenkung der vom Lichtsender ausgesandten Lichtsignale in das zu überwachende Schutzfeld, einen Lichtempfänger zum Empfang von von einem jeweiligen sich im überwachten Schutzfeld befindlichen Objekt zurückgeworfenem Licht und eine Steuereinrichtung zur Erzeugung und/oder Beeinflussung der Lichtsignale und zur Erzeugung eines Objektfeststellungssignals im Falle des Vorhandenseins eines Objektes im überwachten Schutzfeld in Abhängigkeit von den Ausgangssignalen des Lichtempfängers.

Die Lichtsignale durchsetzen eine Frontscheibe, die mit Lichtschranken auf Verschmutzungen kontrolliert wird.

In DE 10 2012 102 395 B3 wird ein optoelektronischer Sensor mit einer umlaufenden Frontscheibe angegeben, die sowohl in Umlaufrichtung als auch in einer Höhenrichtung quer zu der Umlaufrichtung eine Krümmung und dadurch einen umlaufenden Fokusbereich aufweist, in dem an der Innenseite der Frontscheibe gespiegeltes Licht gebündelt wird, wobei mindestens ein Testlichtsender, mindestens ein Reflektor und mindestens ein Testlichtempfänger einen Testlichtpfad aufspannen, auf dem Testlicht von dem Testlichtsender durch die Frontscheibe zu dem Reflektor und anschließend in den Testlichtempfänger gelangt, und wobei eine Auswertungseinheit vorgesehen ist, um anhand eines Abfalls eines von dem Testlicht in dem Testlichtempfänger erzeugten Signals eine nachlassende Lichtdurchlässigkeit der Frontscheibe zu erkennen. Dabei ist der Testlichtempfänger derart auf derselben Seite der Frontscheibe angeordnet wie der Reflektor, dass der Testlichtpfad von dem Reflektor über eine Reflexion an der Innenseite der Frontscheibe zu dem Testlichtempfänger führt.

Der Erfindung liegt die Aufgabe zugrunde, einen optischen Sensor mit hoher Funktionssicherheit bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich und umfasst ein Gehäuse und eine innerhalb des Gehäuses angeordneten Sende-/ Empfangseinheit, wobei von einem Sender der Sende-/ Empfangseinheit emittierte Lichtstrahlen periodisch innerhalb des Überwachungsbereichs geführt sind und dabei eine Scheibe durchsetzen. Von einem Objekt zurückreflektierte Lichtstrahlen sind durch die Scheibe zu einem Empfänger der Sende-/Empfangseinheit geführt. In einer Auswerteeinheit werden Empfangssignale des Empfängers zur Generierung eines Objektfeststellungsignals ausgewertet. Zur Überprüfung der Durchlässigkeit der Scheibe ist eine Testeinheit vorgesehen. Die Testeinheit weist mehrere außerhalb des Gehäuses in dessen Umfangrichtung versetzt angeordnete Testlichtstrahlen emittierende Testsender und wenigstens einen innerhalb des Gehäuses angeordneten Testdetektor auf. Die von den Testsendern emittierten Testlichtstrahlen durchsetzen unterschiedliche Bereiche der Scheibe und sind dann auf den in einer Detektorposition angeordneten Testdetektor geführt. Mit dem Testsender oder wenigstens einem weiteren Testlichtstrahlen emittierenden Testsender sowie dem Testdetektor oder einem weiteren Testdetektor wird eine Referenzmessung durchgeführt, wobei hierzu die von einem Testsender emittierten Testlichtstrahlen über eine Referenzstrecke zu dem Testdetektor oder zu dem weiteren Testdetektor geführt sind. In der Auswerteeinheit erfolgt anhand der bei Referenzmessungen mit dem Testdetektor oder dem weiteren Testdetektor generierten Empfangssignale eine Funktionsüberprüfung von Komponenten der Testeinheit. Ein dem Testsender zugeordneter, um eine Drehachse rotierender Körper ist vorhanden, welcher Führungsmittel zur Vorgabe der Detektionsposition aufweist. Dabei weist der rotierende Körper eine das Führungsmittel bildende Durchgangsbohrung auf. In die Detektionspositionen definierenden Drehstellungen des rotierenden Körpers durchsetzen die von einem Testsender emittierten Testlichtstrahlen die Durchgangsbohrung und sind zu dem oder einem Testdetektor geführt.

Ein wesentlicher Vorteil der Erfindung besteht darin, dass mit der Testeinheit eine vollständige Überprüfung der Scheibe hinsichtlich Beeinträchtigungen wie Verschmutzungen und Beschädigungen erreicht wird.

Die vollständige Überprüfung der Scheibe wird dadurch erreicht, dass mehrere Testsender so angeordnet sind, dass die von ihnen emittierten Testlichtstrahlen unterschiedliche Bereiche der Scheibe durchsetzen, wobei vorteilhaft diese unterschiedlichen Bereiche die gesamte Scheibe abdecken. Die die Scheibe durchsetzenden Testlichtstrahlen werden mit dem oder den Testdetektoren erfasst. Die dadurch generierten Empfangssignale geben ein genaues Maß dafür, ob eine Beeinträchtigung der Scheibe vorliegt oder nicht.

Durch die so gestaltete Scheibenüberwachung wird die Funktionssicherheit des optischen Sensors erheblich erhöht.

Erfindungsgemäß wird die Funktionssicherheit des optischen Sensors dadurch noch weiter erhöht, dass Komponenten der Testeinheit, die zur Scheibenüberwachung eingesetzt werden, insbesondere die Testsender, selbst auf ihre Funktion hin überprüft werden.

Diese Funktionsüberprüfung erfolgt dadurch, dass, vorzugsweise in vorgegebenen Referenzpositionen, die von jeweils einem Testsender oder einem weiteren Testsender emittierten Testlichtstrahlen über eine Referenzstrecke zu dem oder einem Testdetektor beziehungsweise weiteren Testdetektor geführt werden. Wesentlich hierbei ist die definierte Strahlführung der Testlichtstrahlen über die Referenzstrecke, so dass im fehlerfreien Fall die Empfangssignale dieses Testdetektors einer bestimmten Erwartungshaltung entsprechen. Weichen die Empfangssignale von dieser Erwartungshaltung ab, liegt ein entsprechender Fehler der Testeinheit insbesondere des jeweiligen Testsenders vor.

Durch die erfindungsgemäßen Maßnahmen zur Funktionsüberprüfung des optischen Sensors wird eine wesentliche Anforderung für den Einsatz des optischen Sensors im Bereich der Sicherheitstechnik erfüllt. Wird mit der Testeinheit eine Beeinträchtigung der Scheibe oder eine Fehlfunktion der Testeinheit aufgedeckt, kann im optischen Sensor eine Warn- oder Störmeldung generiert werden, so dass eine Bedienperson entsprechende Wartungsmaßnahmen einleiten kann. Wird mit dem als Sicherheitssensor ausgebildeten optischen Sensor ein Gefahrenbereich an einer Anlage oder dergleichen überwacht, so wird vorteilhaft mit dem optischen Sensor ein Abschaltbefehl für die Anlage generiert, wenn im optischen Sensor ein Eindringen eines gefahrbringenden Objekts in den Gefahrenbereich registriert wird, oder wenn mit der Testeinheit eine Beeinträchtigung der Scheibe festgestellt wird, oder wenn im optischen Sensor eine Fehlfunktion festgestellt wird.

Erfindungsgemäß sind mehrere in Umfangsrichtung des Gehäuses versetzt angeordnete Testsender zugeordnet.

Gemäß einer vorteilhaften Ausführungsform der Erfindung ist jeder Testsender in oder an einer auf dem Gehäuse aufsitzenden Kappe ortsfest angeordnet.

Mit dem Begriff Kappe wird allgemein eine mechanische Einheit beschrieben, die am Gehäuse befestigt oder einteilig mit diesem verbunden ist und weiterhin geometrisch derart ausgebildet ist, dass an dieser der oder die Testsender außerhalb des Gehäuses liegend fixiert werden können.

Die einzelnen Testsender emittieren Testlichtstrahlen, die die Scheibe in unterschiedlichen Bereichen durchsetzen, wobei diese Testlichtstrahlen dann von einzelnen stationären Testdetektoren oder von einem rotierenden Testdetektor in diskreten Detektionspositionen zur Durchführung der Scheibenüberwachung erfasst werden.

Die Funktion der Testsender kann in diesem Fall besonders einfach dadurch getestet werden, dass jedem Testsender ein in oder an der Kappe stationär angeordneter weiterer Testdetektor zugeordnet ist, wobei ein Teil der vom Testsender emittierten Testlichtstrahlen über ein Lichtführungselement dem weiteren Testdetektor zugeführt ist.

Durch die Auskopplung eines definierten Teils der Testlichtstrahlen über die Lichtführungselemente zum weiteren Testdetektor wird der jeweilige Testsender fortlaufend, das heißt ohne Unterbrechungen während seiner gesamten Betriebsdauer getestet.

Erfindungsgemäß weist der optische Sensor einen den Testsendern zugeordneten, um eine Drehachse rotierenden Körper auf, welcher Führungsmittel zur Vorgabe von Detektionspositionen von Testdetektoren aufweist.

Dabei weist der rotierende Körper eine das Führungsmittel bildende Durchgangsbohrung auf, wobei in den die Detektionspositionen definierenden

Drehstellungen des rotierenden Körpers die von einem Testsender emittierten Testlichtstrahlen die Durchgangsbohrung durchsetzen und zum Testdetektor geführt sind.

Durch diese Führungsmittel wird erreicht, dass die Testmessungen mit den einzelnen räumlich verteilten Testlichtstrahlen zur Überprüfung der Scheibe zu vorgegebenen Zeiten einzeln nacheinander erfolgen. Damit werden gegenseitige Beeinflussungen der Testmessungen, die mit den einzelnen Testsendern durchgeführt werden, vermieden. Die Zeitabfolge der Testmessungen ist dabei im Wesentlichen durch die Drehzahl des rotierenden Körpers bestimmt.

In diesem Fall ist vorteilhaft eine diskrete Anordnung von stationär angeordneten Testdetektoren vorgesehen.

Diese Testdetektoren dienen zur Durchführung der Scheibenüberwachung, wobei in einer Detektionsposition Testlichtstrahlen durch die Durchgangsbohrung auf einen der Testdetektoren zur Durchführung der Scheibenüberwachung geführt sind.

Diese Ausführungsform ist vorteilhaft durch eine diskrete Anordnung von weiteren Testdetektoren erweitert, wobei vorteilhaft jeweils ein weiterer Testdetektor direkt benachbart zu einem Testdetektor angeordnet ist. In diesem Fall fallen die Detektionspositionen und Referenzpositionen derart zusammen, dass dann, wenn die Durchgangsbohrung vor einem Paar von Testdetektoren angeordnet ist, die jeweiligen Testlichtstrahlen sowohl auf den Testdetektor treffen, so dass mit diesem die Scheibenüberwachung durchgeführt werden kann, als noch auf den weiteren Testdetektor treffen, mit dem die Referenzmessungen durchgeführt werden können.

Zusätzlich sind in Referenzpositionen bildenden diskreten Drehstellungen des rotierenden Körpers Abschattungsmittel im Strahlengang der von einem Testsender zu einem Testdetektor geführten Testlichtstrahlen vorgesehen.

Die Empfangssignale dieses Testdetektors werden für eine Referenzmessung ausgewertet.

Weiterhin kann dem oder jedem Testdetektor ein weiterer Testlichtstrahlen emittierender Testsender zugeordnet sein, wobei in Referenzpositionen bildenden Drehpositionen des rotierenden Körpers von dem weiteren Testsendern emittierte Testlichtstrahlen über die Referenzfläche auf den Testdetektor geführt sind.

Mit den so ausgebildeten Referenzmessungen können die Funktionen der einzelnen Testdetektoren getestet werden.

Gemäß einer weiteren Variante ist auf dem rotierenden Körper ein Testdetektor angeordnet, wobei in den die Detektionspositionen definierenden Drehstellungen des rotierenden Körpers von dem oder einem Testsender emittierte Testlichtstrahlen zum Testdetektor geführt sind.

In diesem Fall wird zur Durchführung der Scheibenüberwachung nur ein Testdetektor benötigt, der durch die Drehung des rotierenden Körpers nacheinander den einzeln räumlich versetzten Testlichtstrahlen zugeordnet wird.

Zur Funktionsprüfung des oder der Testsender ist vorteilhaft auf dem rotierenden Körper ein weiterer Testdetektor angeordnet, wobei in Referenzpositionen bildenden diskreten Drehstellungen des rotierenden Körpers von dem oder einem Testsender emittierte Testlichtstrahlen zum weiteren Testdetektor geführt sind.

Mit dem weiteren Testdetektor in den Referenzpositionen können dann die Referenzmessungen zur Testung des oder der Testsender durchgeführt werden.

Weiterhin kann auch dem Testdetektor ein weiterer Testsender zugeordnet sein, der vorzugsweise dann, wenn der Testdetektor sich nicht in einer der Detektionspositionen befindet, Testlichtstrahlen über ein Lichtführungselement oder dergleichen dem Testdetektor zuführt.

Der erfindungsgemäße optische Sensor kann insbesondere als Distanzsensor ausgebildet sein. Durch die Erfassung der aktuellen Ablenkrichtung der Lichtstrahlen der Sende-/ Empfangseinheit und die Auswertung der mit der Sende-/ Empfangseinheit ermittelten Distanzwerte können mit dem optischen Sensor die Positionen von Objekten im Überwachungsbereich bestimmt werden. Die Distanzmessung kann insbesondere nach dem Phasenmessprinzip oder auch dem Impuls-Laufzeit-Verfahren erfolgen.

Gemäß einer ersten Ausgestaltung des optischen Sensors ist die Sende-/ Empfangseinheit um eine Drehachse rotierend angeordnet, das heißt in diesem Fall erfolgt die Ablenkung der Lichtstrahlen, indem die gesamte Sende-/ Empfangseinheit gedreht wird.

Gemäß einer weiteren Ausgestaltung des optischen Sensors ist die Sende-/ Empfangseinheit stationär im Gehäuse angeordnet. Die Lichtstrahlen sind über eine um eine Drehachse rotierende Ablenkeinheit geführt.

Die Erfindung wird im Folgenden anhand der Zeichnungen erläutert. Es zeigen:
- Figur 1:: Erstes Ausführungsbeispiel des erfindungsgemäßen optischen Sensors mit einer ersten Ausgestaltung einer Testeinheit für eine Scheibenüberwachung bei einer ersten Drehstellung eines rotie-renden Körpers.
- Figur 1a:: Optischer Sensor gemäß Figur 1 mit dem rotierenden Körper in einer zweiten Drehstellung.
- Figur 2:: Teildarstellung des optischen Sensors gemäß Figur 1 mit Komponenten der Testeinheit.
- Figur 3:: Zweites Ausführungsbeispiel des optischen Sensors.
- Figur 4:: Teildarstellung des optischen Sensors gemäß Figur 1 mit Komponenten der Testeinheit.
- Figur 5:: Drittes Ausführungsbeispiel des optischen Sensors.

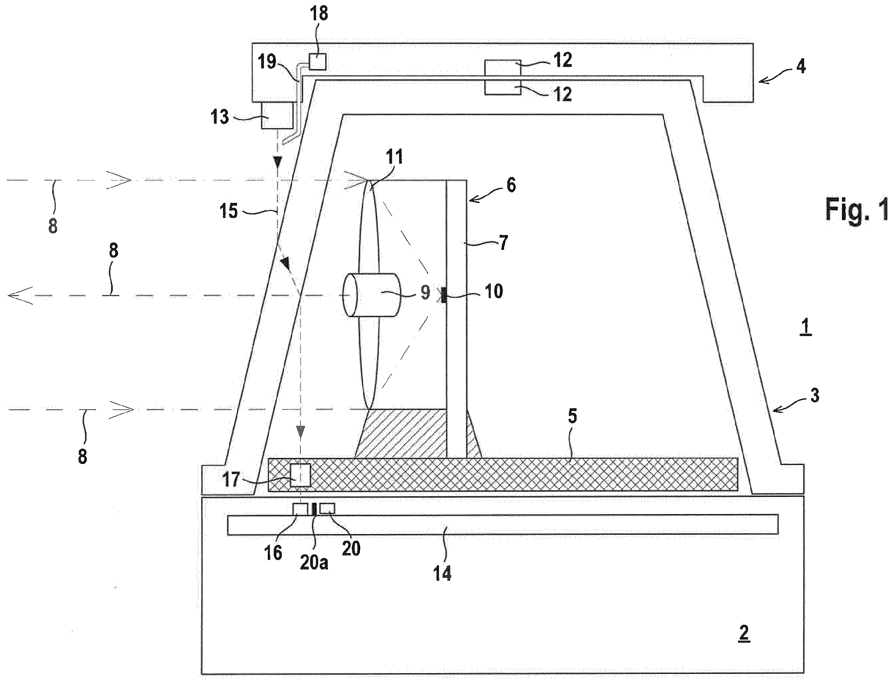

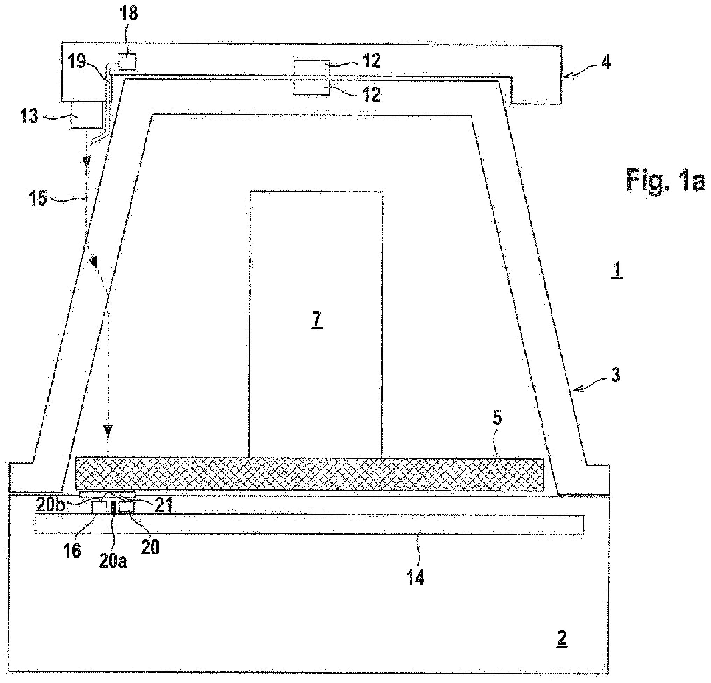

Figur 1 zeigt ein Ausführungsbeispiel eines optischen Sensors 1 zur Erfassung von Objekten in einem Überwachungsbereich. Der optische Sensor 1 weist einen stationären feststehenden Sockel 2 auf, auf welchem ein Gehäuse 3 befestigt ist, das heißt auch das Gehäuse 3 ist stationär angeordnet. Auf der Oberseite des Gehäuses 3 sitzt eine Kappe 4 fest auf, die somit auch stationär angeordnet ist. Das Gehäuse 3 weist einen kreisförmigen Querschnitt auf, der sich zu seiner Oberseite hin kontinuierlich verjüngt. Die Mantelfläche des Gehäuses 3 bildet eine lichtdurchlässige Scheibe.

Innerhalb des Gehäuses 3 befindet sich ein um eine Drehachse drehbarer rotierender Körper, der im vorliegenden Fall von einem kreisscheibenförmigen Teller 5 gebildet ist. Der Teller 5 liegt in einer horizontalen Ebene. Der Teller 5 wird um eine senkrechte Drehachse gedreht, die mit der Symmetrieachse des Gehäuses 3 zusammenfällt.

Der Teller 5 wird mittels eines Elektromotors in eine Drehbewegung versetzt. Der nicht gesondert dargestellte Stator befindet sich im feststehenden Sockel 2. Der ebenfalls nicht dargestellte Rotor ist mit dem Teller 5 verbunden.

Auf dem Teller 5 mitrotierend befindet sich eine Sende-/ Empfangseinheit 6 zur Erfassung der Objekte im Überwachungsbereich. Die Sende-/ Empfangseinheit 6 ist an einer auf dem Teller 5 aufsitzenden Halterung 7 gelagert. Die Sende-/ Empfangseinheit 6 weist einen Lichtstrahlen 8 emittierenden Sender 9 in Form einer Laserdiode auf. Weiterhin weist die Sende-/ Empfangseinheit 6 einen Empfänger 10 auf, dem eine Empfangsoptik 11 vorgeordnet ist. Zur Durchführung der Objektdetektion werden die vom Sender 9 emittierten Lichtstrahlen 8 durch die Scheibe in den Überwachungsbereich geführt. Die von einem Objekt zurückreflektierten Lichtstrahlen 8 werden durch die Scheibe geführt und gelangen über die Empfangsoptik 11 zum Empfänger 10, der von einer Photodiode gebildet sein kann. Durch die Drehbewegung der Sende-/ Empfangseinheit 6 werden die Lichtstrahlen 8 periodisch in einem flächigen Überwachungsbereich geführt, der sich über den vollen Winkelbereich von 360° oder Ausschnitten hiervon erstrecken kann.

Figur 1 zeigt den optischen Sensor 1 in einer ersten Drehstellung des Tellers 5. Figur 1a zeigt den optischen Sensor 1 in einer zweiten Drehstellung des Tellers 5.

Der optische Sensor 1 ist im vorliegenden Fall in Form eines nach dem Impuls-Laufzeit-Verfahren arbeitenden Distanzsensors ausgebildet. Hierzu emittiert der Sender 9 Lichtstrahlen 8 in Form von Folgen kurzer Lichtimpulse. Zur Distanzbestimmung wird die Laufzeit der Lichtimpulse zum Objekt und wieder zurück gemessen. Diese Auswertung erfolgt in einer nicht dargestellten Auswerteeinheit. Die Auswerteeinheit ist mit der Sende-/ Empfangseinheit 6 über eine berührungslos arbeitende Datenübertragungsstrecke verbunden. In der Auswerteeinheit wird auch die aktuelle Ablenkposition der Lichtstrahlen 8 erfasst. Aus den bestimmten Distanzwerten und aus den aktuellen Ablenk-Positionswerten können die Positionen von Objekten im Überwachungsbereich erfasst werden.

Der optische Sensor 1 kann als Sicherheitssensor ausgebildet sein. Hierzu weist die Auswerteeinheit einen redundanten Aufbau auf, vorzugsweise in Form zweier sich zyklisch gegenseitig überwachender Rechnereinheiten.

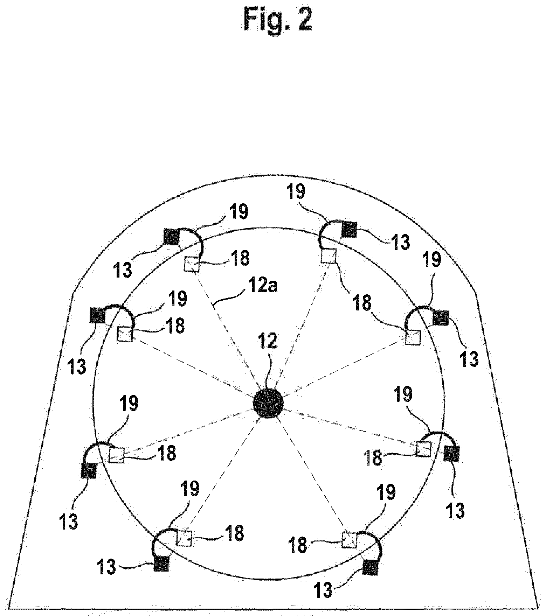

Zur Durchführung einer Scheibenüberwachung, das heißt zur Überprüfung, ob die Scheibe verschmutzt oder beschädigt und damit hinsichtlich ihrer Lichtdurchlässigkeit beeinträchtigt ist, ist eine Testeinheit vorgesehen, wobei Komponenten dieser Testeinheit in Figur 2 gesondert dargestellt sind.

Die Testeinheit umfasst mehrere an das Energieübertragungsmittel 12 angeschlossene identisch ausgebildete Testsender 13, die an der Unterseite des über das Gehäuse 3 hervorstehenden Randes der Kappe 4 befestigt sind. Jedem Testsender 13 ist ein Testdetektor 16 zugeordnet, der auf der Oberseite der Platine 14 angeordnet ist. Damit sind die Testsender 13 und Testdetektoren 16 stationär angeordnet, wobei jeweils ein Testsender 13 und ein Testdetektor 16 eine Lichtschranke ausbilden.

Im vorliegenden Fall sind acht Testsender 13 und acht Testdetektoren 16 vorgesehen. Natürlich ist auch eine andere Anzahl von Testsendern 13 und Testdetektoren 16 möglich.

Die Testsender 13 sind so angeordnet, dass die von ihnen emittierten Testlichtstrahlen 15 die Scheibe an verschiedenen Bereichen durchsetzen und dann in Richtung des zugeordneten Testdetektors 16 geführt sind.

Im Teller 5 befindet sich als Führungsmittel für die Testlichtstrahlen 15 eine Durchgangsbohrung 17.

Zur Scheibenüberwachung mit der so gebildeten Testeinheit werden Testmessungen durchgeführt, die in der Auswerteeinheit ausgewertet werden. Befindet sich die Durchgangsbohrung 17 im Bereich eines des Testsenders 13, so werden die von diesem Testsender 13 emittierten und die Scheibe lokal durchsetzenden Testlichtstrahlen 15 durch die Durchgangsbohrung 17 geführt und gelangen zu dem zugeordneten Testdetektor 16 (Figur 1).

Durch die Drehbewegung des Tellers 5 wird die Durchgangsbohrung 17 nacheinander in einzelne Detektionspositionen, das heißt zu den einzelnen Testsendern 13 geführt, so dass mit diesen zeitlich versetzt einzelne Testmessungen erfolgen.

In der Auswerteeinheit erfolgt zweckmäßig eine Schwellwertbewertung der Empfangssignale der Testdetektoren 16. Auf diese Weise wird festgestellt, ob einzelne Bereiche oder die gesamte Scheibe in ihrer Lichtdichtlässigkeit beeinträchtigt sind. Ist dies der Fall, wird in der Auswerteeinheit eine Stör- oder Warnmeldung generiert.

Zur Funktionsüberprüfung von Komponenten der Testeinheiten sind bei der Ausführungsform der Figuren 1, 1a weitere Testdetektoren 18 vorgesehen. Dabei sind die weiteren Testdetektoren 18 in der Kappe 4 stationär zugeordnet, wobei jeweils ein weiterer Testdetektor 18 einem Testsender 13 räumlich dicht zugeordnet ist. Alle Testsender 13 und weitere Testdetektoren 18 sind über Leitungen 12a an die Energieübertragungsmittel 12 angeschlossen (Figur 2), die vorzugsweise für eine berührungslose Energieübertragung zwischen Kappe 4 und Gehäuse 3 sorgen.

Jedem Testsender 13 ist ein Lichtführungselement 19 zugeordnet, das von einem Lichtleiterelement oder dergleichen gebildet sein kann. Mit dem Lichtführungselement 19 wird ein definierter Teil der Testlichtstrahlen 15 des jeweiligen Testsenders 13 ausgekoppelt und dem zugeordneten weiteren Testdetektor 18 zugeführt. Somit können fortlaufend, das heißt ohne Unterbrechungen Referenzmessungen derart durchgeführt werden, dass die in den Testdetektoren 18 erhaltenen Empfangssignale mit einer Erwartungshaltung verglichen werden, wodurch geprüft wird, ob die Testsender 13 fehlerfrei arbeiten.

Gemäß einer nicht dargestellten Variante könnten die weiteren Testdetektoren 18 auch unmittelbar benachbart zu den Testdetektoren 16 auf der Platine 14 angeordnet sein. In diesem Fall gelangen Testlichtstrahlen 15 der Testsender 13 zu den weiteren Testdetektoren 18, wenn diese im Bereich der Durchgangsbohrung 17 liegen. Falls die Durchgangsbohrung 17 nicht im Bereich eines weiteren Testdetektors 18 liegt, erhält dieser kein Testlicht und darf dementsprechend kein Empfangssignal generieren.

Im vorliegenden Fall ist jedem Testdetektor 16 unmittelbar benachbart ein weiterer Testsender 20 zugeordnet, wobei der Testdetektor 16 und der weitere Testsender 20 durch einen Trennsteg 20a optisch getrennt sind.

Wenn, wie in Figur 1a dargestellt, der Testdetektor 16 und der weitere Testsender 20 im Bereich einer Referenzfläche 21 an der Unterseite der Platine 14 ist, ist der weitere Testsender 20 aktiviert und emittiert Testlichtstrahlen 20b, die über die Referenzfläche 21 zum Testdetektor 16 geführt sind. Durch diese Referenzmessung wird die Funktion der Testdetektoren 16 getestet.

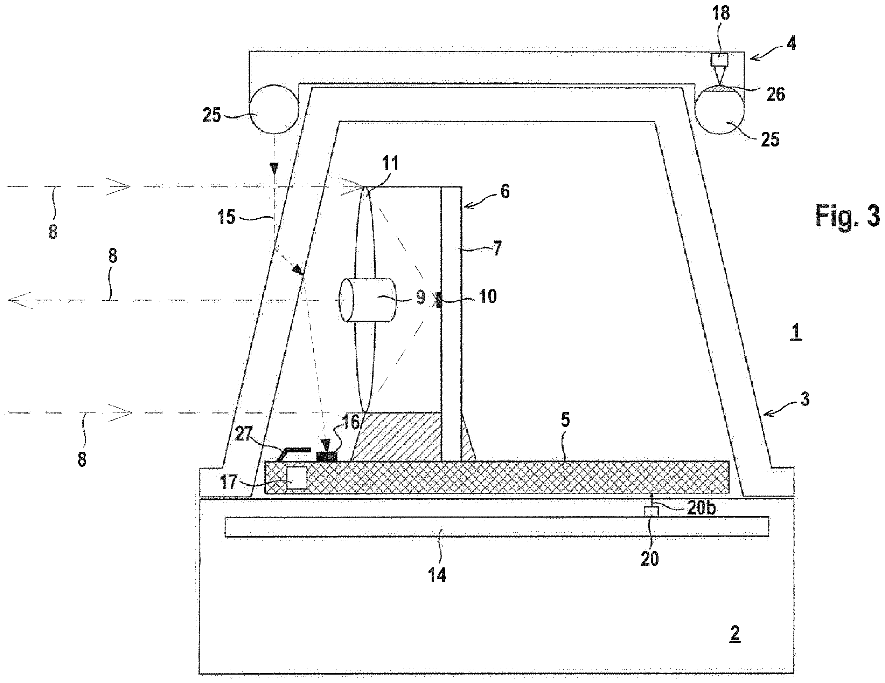

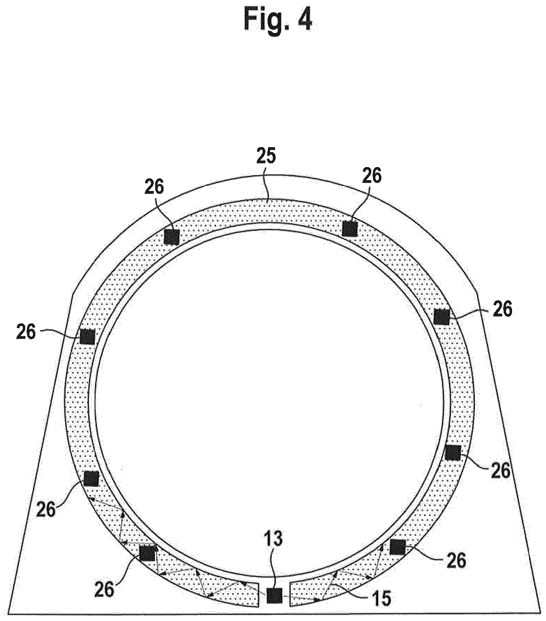

Die Figuren 3 und 4 zeigen ein weiteres Ausführungsbeispiel des optischen Sensors 1. In diesem Fall ist nur ein Testdetektor 16 auf der Oberseite des Tellers 5 vorgesehen. Als Sendeeinheit ist in der Kappe 4 nur ein Testsender 13 vorgesehen. Die vom Testsender 13 emittierten Testlichtstrahlen 15 werden, wie Figur 4 zeigt, in einen ringförmigen Lichtleiter 25 eingekoppelt, so dass sie dort umlaufen. Über dessen Umfang äquidistant verteilt weist der Lichtleiter 25 mehrere Auskoppelstrukturen 26 auf, über welche Testlichtstrahlen 15 ausgekoppelt werden, wobei diese ausgekoppelten Testlichtstrahlen 15 die Scheibe durchsetzen.

Die Auskoppelstrukturen 26 können von Aufrauhungen, Beschichtungen, Prismenstrukturen oder dergleichen an der Mantelfläche des Lichtleiters 25 ausgebildet sein.

Durch diese Auskoppelstrukturen 26 werden in Umfangsrichtung versetzt Testlichtstrahlen 15 generiert, die die Scheibe durchsetzen. In diskreten Detektionspositionen des Testdetektors 16 empfängt dieser einen der Testlichtstrahlen 15, wobei zeitlich versetzt nacheinander alle Testlichtstrahlen 15 in unterschiedlichen Detektionspositionen erfasst werden. Somit kann die gesamte Scheibe auf eventuelle Beeinträchtigungen untersucht werden.

Zur Funktionsprüfung des Testsenders 13 ist über dem Lichtleiter 25 ein weiterer Testdetektor 18 angeordnet, wobei über eine weitere Auskoppelstruktur 26 Testlichtstrahlen 15 in diesen Testdetektor 18 zur Durchführung von Referenzmessungen eingekoppelt werden.

Auch bei der Ausführungsform der Figur 3 ist im Teller 5 eine Durchgangsbohrung 17 vorgesehen, wobei an deren Oberseite eine Lichtführung 27 angeordnet ist. Auf der Platine 14 sitzt ein weiterer Testsender 20 auf. Befindet sich die Durchgangsbohrung 17 im Bereich des Testsenders 20, so werden Testlichtstrahlen 20b des Testsenders 20 über die Lichtführung 27 zum Testdetektor 16 geführt. Anhand dieser Referenzmessung kann die Funktion des Testdetektors 16 geprüft werden.

Die Senderanordnung mit dem Testsender 13 und dem Lichtleiter 25 kann natürlich auch für die Anordnung der Testdetektoren 16 gemäß Figur 1 eingesetzt werden. Umgekehrt kann auch die Senderanordnung mit dem Testsender 13 gemäß Figur 1 auch für die Anordnung des Testdetektors 16 gemäß Figur 3 eingesetzt werden.

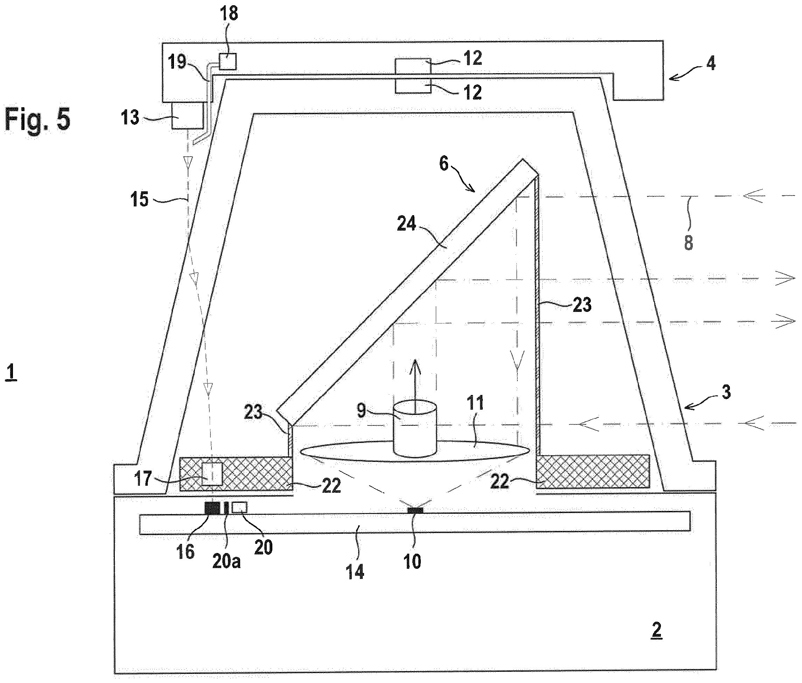

Figur 5 zeigt eine Variante des optischen Sensors 1 gemäß Figur 1. Im Unterschied zur Ausführungsform gemäß Figur 1 ist nun die Sende-/ Empfangseinheit 6 stationär im Gehäuse 3 angeordnet, wobei der Empfänger 10 auf der Platine 14 angeordnet ist und der Sender 9 mit der Empfangsoptik 11 diesem vorgeordnet ist.

Der auf dem Rotor des Elektromotors drehbar gelagerte rotierende Körper ist im vorliegenden Fall von einem Ring 22 gebildet. Auf dem Ring 22 ist mit Stegen 23 ein Umlenkspiegel 24 gelagert, der mit dem Ring 22 mitrotiert. Die vom Sender 9 emittieren Lichtstrahlen 8 werden durch die Ablenkung am Umlenkspiegel 24 periodisch innerhalb des Überwachungsbereichs geführt. Die Objektdetektion mit dieser Sender-/ Empfangseinheit 6 erfolgt in gleicher Weise wie bei der Ausführungsform gemäß Figur 1.

Die Testeinheit und die Mittel zu deren Funktionsprüfung entsprechen der Ausführungsform gemäß Figur 1.

### Bezugszeichenliste

- (1): Optischer Sensor
- (2): Sockel
- (3): Gehäuse
- (4): Kappe
- (5): Teller
- (6): Sende/- Empfangseinheit
- (7): Halterung
- (8): Lichtstrahlen
- (9): Sender
- (10): Empfänger
- (11): Empfangsoptik
- (12): Energieübertragungsmittel
- (13): Testsender
- (14): Platine
- (15): Testlichtstrahlen
- (16): Testdetektor
- (17): Durchgangsbohrung
- (18): weiterer Testdetektor
- (19): Lichtführungselement
- (20): weiterer Testsender
- (20a): Trennsteg
- (20b): Testlichtstrahlen
- (21): Referenzfläche
- (22): Ring
- (23): Stege
- (24): Umlenkspiegel
- (25): Lichtleiter
- (26): Auskoppelstruktur
- (27): Lichtführung

## Patentansprüche

1. Optischer Sensor (1) zur Erfassung von Objekten in einem Überwachungsbereich mit einem Gehäuse (3) und einer innerhalb des Gehäuses (3) angeordneten Sende-/Empfangseinheit (6), wobei von einem Sender (9) der Sende-/Empfangseinheit (6) emittierte Lichtstrahlen (8) periodisch innerhalb des Überwachungsbereichs geführt sind und dabei eine Scheibe durchsetzen, wobei von einem Objekt zurückreflektierte Lichtstrahlen (8) durch die Scheibe zu einem Empfänger (10) der Sende-/ Empfangseinheit (6) geführt sind und in einer Auswerteeinheit Empfangssignale des Empfängers (10) zur Generierung eines Objektfeststellungsignals ausgewertet werden, und wobei eine Testeinheit zur Überprüfung der Durchlässigkeit der Scheibe vorgesehen ist, wobei die Testeinheit mehrere außerhalb des Gehäuses (3) in dessen Umfangsrichtung versetzt angeordnete Testlichtstrahlen (15) emittierende Testsender (13) und wenigstens einen innerhalb des Gehäuses (3) angeordneten Testdetektor (16) aufweist, wobei die den Testsendern (13) emittierten Testlichtstrahlen (15) unterschiedliche Bereiche der Scheibe durchsetzen und dann auf den in einer Detektorposition angeordneten Testdetektor (16) geführt sind, und wobei mit dem Testsender (13) oder wenigstens einem weiteren Testlichtstrahlen (20b) emittierten Testsender (20) sowie dem Testdetektor (16) oder einem weiteren Testdetektor (18) eine Referenzmessung durchgeführt wird, wobei hierzu die von einem Testsender (13) emittierten Testlichtstrahlen (15) über eine Referenzstrecke zu dem Testdetektor (16) oder zu dem weiteren Testdetektor (18) geführt sind, wobei in der Auswerteeinheit anhand der bei Referenzmessungen mit dem Testdetektor (16) oder dem weiteren Testdetektor (18) generierten Empfangssignale eine Funktionsüberprüfung von Komponenten der Testeinheit erfolgt, und dass ein dem Testsender (13) zugeordneter, um eine Drehachse rotierender Körper vorhanden ist, welcher Führungsmittel zur Vorgabe der Detektionsposition aufweist- , wobei der rotierende Körper eine das Führungsmittel bildende Durchgangsbohrung (17) aufweist, wobei in die Detektionspositionen definierenden Drehstellungen des rotierenden Körpers die von einem Testsender (13) emittierten Testlichtstrahlen (15) die Durchgangsbohrung (17) durchsetzen und zu dem oder einem Testdetektor (16) geführt sind.

2. Optischer Sensor nach Anspruch 1, wobei in der Auswerteeinheit Empfangssignale, die mit dem wenigstens einen in Detektionsposition angeordneten Testdetektor (16) generiert werden als Maß für die Durchlässigkeit der Scheibe ausgewertet werden.

3. Optischer Sensor nach einem der Ansprüche 1 oder 2, wobei jeder Testsender (13) in oder an einer auf dem Gehäuse (3) aufsitzenden Kappe (4) ortsfest angeordnet ist.

4. Optischer Sensor nach einem der Ansprüche 1 bis 3, wobei jedem Testsender (13) ein in oder an der Kappe (4) stationär angeordneter Testdetektor (18) zugeordnet ist, wobei ein Teil der vom Testsender (13) emittierten Testlichtstrahlen (15) über ein Lichtführungselement (19) dem weiteren Testdetektor (18) zugeführt ist.

5. Optischer Sensor nach einem der Ansprüche 1 bis 4, wobei eine diskrete Anordnung von stationär angeordneten Testdetektoren (16) vorgesehen sind.

6. Optischer Sensor nach Anspruch 5, wobei in Referenzposition bildenden Drehstellungen des rotierenden Körpers Testlichtstrahlen (15) auf die Testdetektoren (18) geführt sind.

7. Optischer Sensor nach Anspruch 6, wobei in Referenzpositionen bildenden diskreten Drehstellungen des rotierenden Körpers Abschattungsmittel im Strahlengang der von einem Testsender (13) zu einem Testdetektor (16) geführten Testlichtstrahlen (15) vorgesehen sind, und wobei die Empfangssignale dieses Testdetektors (16) für eine Referenzmessung ausgewertet werden.

8. Optischer Sensor nach Anspruch 7, wobei auf dem rotierenden Körper ein Testdetektor (16) angeordnet ist, wobei in den die Detektionsposition definierenden Drehstellungen des rotierenden Körpers von dem oder einem Testsender (13) emittierte Testlichtstrahlen (15) zum Testdetektor (16) geführt sind.

9. Optischer Sensor nach Anspruch 8, wobei in diskreten Drehstellungen des rotierenden Körpers von dem oder einem Testsender (13) emittierte Testlichtstrahlen (15) zum weiteren Testdetektor (18) geführt sind.

10. Optischer Sensor nach einem der Ansprüche 1 bis 9, wobei dem oder jedem Testdetektor (16) ein Testlichtstrahlen (20b) emittierender Testsender (13) zugeordnet ist, wobei in Referenzpositionen bildenden Drehpositionen des rotierenden Körpers von dem Testsender (20) emittierte Testlichtstrahlen (20b) über eine Referenzfläche (21) auf den Testdetektor (16) geführt sind.

11. Optischer Sensor nach einem der Ansprüche 1 bis 10, wobei dieser ein Distanzsensor ist.

12. Optischer Sensor nach einem der Ansprüche 1 bis 11, wobei die Sende-/Empfangseinheit (6) um eine Drehachse rotierend angeordnet ist.

13. Optischer Sensor nach einem Ansprüche 1 bis 12, wobei die Sende-/Empfangseinheit (6) stationär im Gehäuse (3) angeordnet ist, und dass die Lichtstrahlen (8) über eine um eine Drehachse rotierende Ablenkeinheit geführt sind.

## Claims

1. An optical sensor (1) for detecting objects in a monitoring area, having a housing (3) and a transmitting/receiving unit (6) arranged within the housing (3), light beams (8) emitted by a transmitter (9) of the transmitting/receiving unit (6) being guided perpendicularly within the monitoring area and passing through a disc, wherein light beams (8) reflected back from an object are guided through the pane to a receiver (10) of the transmitter/receiver unit (6) and receiver signals of the receiver (10) are evaluated in an evaluation unit for generating an object detection signal, and wherein a test unit is provided for checking the permeability of the pane,
wherein the test unit has a plurality of test transmitters (13) emitting test light beams (15) arranged outside the housing (3) offset in the circumferential direction thereof and at least one test detector (16) arranged inside the housing (3),
wherein the test light beams (15) emitted by the test transmitter (13) pass through different regions of the disc and are then guided onto the test detector (16) arranged in a detector position, and
wherein a reference measurement is carried out with the test transmitter (13) or at least one further test emitted test light beams (20b) and the test detector (16) or a further test detector (18), wherein for this purpose the test light beams (15) emitted by a test transmitter (13) are guided via a reference path to the test detector (16) or to the further test detector (18),
wherein a function check of components of the test unit is carried out in the evaluation unit on the basis of the received signals generated during reference measurements with the test detector (16) or the further test detector (18), and in that a body which is associated with the test transmitter (13) and rotates about an axis of rotation is present, which body has guide means for presetting the detection position,
wherein the rotating body has a through bore (17) forming the guide means, wherein, in rotational positions of the rotating body defining the detection positions, the test light beams (15) emitted by a test transmitter (13) pass through the through-bore (17) and are guided to the or a test detector (16).

2. An optical sensor according to claim 1, wherein received signals which are generated with the at least one test detector (16) arranged in the detection position are evaluated in the evaluation unit as a measure of the permeability of the pane.

3. An optical sensor according to one of claims 1 or 2, wherein each test transmitter (13) is arranged in a stationary manner in or on a cap (4) seated on the housing (3).

4. An optical sensor according to one of the claims 1 to 3, wherein each test transmitter (13) is associated with a test detector (18) arranged in a stationary manner in or on the cap (4), wherein a part of the test light beams (15) emitted by the test transmitter (13) is supplied to the further test detector (18) via a light guiding element (19).

5. An optical sensor according to any one of claims 1 to 4, wherein a discrete arrangement of stationarily arranged test detectors (16) is provided.

6. An optical sensor according to claim 5, wherein test light beams (15) are guided onto the test detectors (18) in rotational positions of the rotating body forming reference positions.

7. An optical sensor according to claim 6, wherein shading means are provided in the beam path of the test light beams (15) guided from a test transmitter (13) to a test detector (16) in discrete rotational positions of the rotating body forming reference positions, and wherein the received signals of this test detector (16) are evaluated for a reference measurement.

8. An optical sensor according to claim 7, wherein a test detector (16) is arranged on the rotating body, wherein test light beams (15) emitted by the or a test transmitter (13) are guided to the test detector (16) in the rotational positions of the rotating body defining the detection position.

9. An optical sensor according to claim 8, wherein test light beams (15) emitted by the or a test transmitter (13) are guided to the further test detector (18) in discrete rotational positions of the rotating body.

10. An optical sensor according to one of claims 1 to 9, wherein a test transmitter (13) emitting test light beams (20b) is associated with the or each test detector (16), wherein test light beams (20b) emitted by the test transmitter (20) are guided via a reference surface (21) onto the test detector (16) in rotary positions of the rotating body forming reference positions.

11. An optical sensor according to any one of claims 1 to 10, wherein the optical sensor is a distance sensor.

12. An optical sensor according to any one of claims 1 to 11, wherein the transceiver unit (6) is arranged to rotate about an axis of rotation.

13. An optical sensor according to any one of claims 1 to 12, wherein the transmitting! receiving unit (6) is arranged stationary in the housing (3), and in that the light beams (8) are guided via a deflecting unit rotating about an axis of rotation.

## Revendications

1. Capteur optique (1) pour la détection d'objets dans une zone de surveillance, comportant un boîtier (3) et une unité d'émission/réception (6) disposée à l'intérieur du boîtier (3), les faisceaux lumineux (8) émis par un émetteur (9) de l'unité d'émission/ réception (6) étant guidés perpendiculairement à l'intérieur de la zone de surveillance et traversant une vitre, dans lequel les faisceaux lumineux (8) réfléchis par un objet sont guidés à travers la vitre vers un récepteur (10) de l'unité d'émission/réception (6) et les signaux du récepteur (10) sont évalués dans une unité d'évaluation pour générer un signal de détection d'objet, et dans lequel une unité d'essai est prévue pour vérifier la perméabilité de la vitre,
dans lequel l'unité de test comporte plusieurs émetteurs de test (13) émettant des faisceaux lumineux de test (15) disposés à l'extérieur du boîtier (3), décalés dans la direction circonférentielle de celui-ci, et au moins un détecteur de test (16) disposé à l'intérieur du boîtier (3),
dans lequel les faisceaux lumineux de test (15) émis par l'émetteur de test (13) traversent différentes régions du disque et sont ensuite guidés vers le détecteur de test (16) disposé dans une position de détection, et
dans lequel une mesure de référence est effectuée avec l'émetteur de test (13) ou au moins un autre faisceau lumineux de test émis (20b) et le détecteur de test (16) ou un autre détecteur de test (18), les faisceaux lumineux de test (15) émis par un émetteur de test (13) étant guidés par un chemin de référence jusqu'au détecteur de test (16) ou à l'autre détecteur de test (18),
dans lequel un contrôle du fonctionnement des composants de l'unité de test est effectué dans l'unité d'évaluation sur la base des signaux reçus générés lors des mesures de référence avec le détecteur de test (16) ou le détecteur de test supplémentaire (18), et dans lequel un corps associé à l'émetteur de test (13) et tournant autour d'un axe de rotation est présent, lequel corps comporte des moyens de guidage pour le préréglage de la position de détection,
dans lequel le corps rotatif comporte un alésage traversant (17) formant les moyens de guidage,
dans lequel, dans les positions de rotation du corps rotatif définissant les positions de détection, les faisceaux lumineux de test (15) émis par un émetteur de test (13) passent à travers l'alésage (17) et sont guidés vers le ou un détecteur de test (16).

2. Capteur optique selon la revendication 1, dans lequel les signaux reçus qui sont générés par au moins un détecteur de test (16) disposé dans la position de détection sont évalués dans l'unité d'évaluation comme une mesure de la perméabilité de la vitre.

3. Capteur optique selon l'une des revendications 1 ou 2, dans lequel chaque émetteur de test (13) est disposé de manière fixe dans ou sur un capuchon (4) placé sur le boîtier (3).

4. Capteur optique selon l'une des revendications 1 à 3, dans lequel chaque émetteur de test (13) est associé à un détecteur de test (18) disposé de manière fixe dans ou sur le capuchon (4), dans lequel une partie des faisceaux lumineux de test (15) émis par l'émetteur de test (13) est fournie au détecteur de test supplémentaire (18) par l'intermédiaire d'un élément de guidage de la lumière (19).

5. Capteur optique selon l'une des revendications 1 à 4, dans lequel un arrangement discret de détecteurs de test (16) disposés de manière stationnaire est prévu.

6. Capteur optique selon la revendication 5, dans lequel les faisceaux lumineux de test (15) sont guidés vers les détecteurs de test (18) dans des positions de rotation du corps rotatif formant des positions de référence.

7. Capteur optique selon la revendication 6, dans lequel des moyens d'ombrage sont prévus dans la trajectoire des faisceaux lumineux de test (15) guidés depuis un émetteur de test (13) vers un détecteur de test (16) dans des positions de rotation discrètes du corps rotatif formant des positions de référence, et dans lequel les signaux reçus de ce détecteur de test (16) sont évalués pour une mesure de référence.

8. Capteur optique selon la revendication 7, dans lequel un détecteur de test (16) est disposé sur le corps rotatif, dans lequel les faisceaux lumineux de test (15) émis par le ou un émetteur de test (13) sont guidés vers le détecteur de test (16) dans les positions de rotation du corps rotatif définissant la position de détection.

9. Capteur optique selon la revendication 8, dans lequel les faisceaux lumineux de test (15) émis par le ou un émetteur de test (13) sont guidés vers le détecteur de test supplémentaire (18) dans des positions de rotation discrètes du corps rotatif.

10. Capteur optique selon l'une des revendications 1 à 9, dans lequel un émetteur de test (13) émettant des faisceaux lumineux de test (20b) est associé au ou à chaque détecteur de test (16), dans lequel les faisceaux lumineux de test (20b) émis par l'émetteur de test (20) sont guidés via une surface de référence (21) sur le détecteur de test (16) dans des positions rotatives du corps rotatif formant des positions de référence.

11. Capteur optique selon l'une des revendications 1 à 10, dans lequel le capteur optique est un capteur de distance.

12. Capteur optique selon l'une des revendications 1 à 11, dans lequel l'unité émettrice-réceptrice (6) est conçue pour tourner autour d'un axe de rotation.

13. Capteur optique selon l'une des revendications 1 à 12, dans lequel l'unité d'émission/ réception (6) est stationnaire dans le boîtier (3), et dans lequel les faisceaux lumineux (8) sont guidés par une unité de déviation tournant autour d'un axe de rotation.
